# EUROPEAN PATENT SPECIFICATION

(11) **EP 1 512 327 B1**
(45) Date of publication and mention of the grant of the patent: **13.12.2006**
(21) Application number: 04255270.3
(22) Date of filing: 01.09.2004
(51) Int. Cl.: A23J 3/16, A21D 13/06, A21D 2/26

(54) **Dough-based and baked products comprising deflavoured soy protein material obtainable by a specific method**
Produkte auf Teigbasis und Backwaren enthaltend geruchsneutralisierte Sojaprotein-Zusatzstoffe erhältlich mittels ein spezifisches Verfahren
Produits à base de pâte et produits cuits comprenant des protéines de soja avec une odeur et un goût neutralisés susceptibles d'être obtenus d'après un procédé spécifique

(30) Priority: 04.09.2003 US 654769
(43) Date of publication of application: 09.03.2005
(73) Proprietor: KRAFT FOODS HOLDINGS, INC., Northfield, Illinois 60093 (US)
(72) Inventor: Akashe, Ahmad, Mundelein Illinois 60060 (US); Meibach, Ronald L., Deerfield Illinois 60015 (US)
(74) Representative: Smaggasgale, Gillian Helen

(56) References cited:
- WO-A-03/070007
- US-A- 3 995 071
- US-A- 4 088 795
- US-A- 4 420 425
- US-A1- 2002 102 339

## Description

### BACKGROUND OF THE INVENTION

This invention relates generally to the processing of soy-derived materials for use in various food products, especially dough-based and baked products. More particularly, the invention relates to a method of deflavoring soy materials in order to make them acceptable in a wide range of foods, including dough-based and baked products.

In recent years, soy proteins have become widely used in food products, for the health benefits to be obtained from their use. In some applications, the taste of the soy materials is not objectionable. However, in some uses, such as dairy analog products, beverages and the like, the flavors found in soy materials may prevent their ready acceptance by the consumer. Thus, in order to extend the uses of soy materials, the present inventors wanted to find a method of reducing the flavor components of soy materials. However, it was not evident that methods which had been used previously to remove flavor components from other organic materials would be successful in the treating of soy materials. Organic materials, since they have complex compositions, must be tested to determine whether any given method of treating them will be satisfactory**.**

Examples of previous attempts to provide foodstuffs which are fortified with proteins are disclosed in International Publication No. 03/070,007, US Published Patent Application 2002/102,339 and US Patent 4,088,795.

International Publication No. 03/070,007 discloses protein-containing particles with a high eating quality characterised by having a high content of exogenous protein and optionally of phospholipids and/or of fibres. WO 03/070,007 also provides a method for manufacturing protein-containing particles with a high eating quality characterised by having a high content of exogenous protein and optionally of phospholipids and of fibres. WO 03/070007 further provides soy protein-containing beads, methods for the manufacture of the same and bread comprising soy protein-containing beards and methods for the manufacture of same.

US Published Patent Application 2002/102,339 discloses soy derived materials such as soy milk, soy flour, soy concentrates and soy protein isolates which are deflavored by adjusting the pH of an aqueous composition of such soy derived materials to about 9 to 12 to solubilize the soy proteins and to release the flavoring compounds and thereafter passing the pH-adjusted composition to an ultrafiltration membrane having a molecular weight cutoff up to about 50,000 Daltons under conditions at which the flavoring compounds pass through the membrane, leaving the retained soy material with improved flavor.

US Patent 4,088,795 discloses an oilseed lipid-protein product adapted for food use is prepared by aqueous extraction of fat containing oilseed materials including the ground raw oilseed or full-fat oilseed flour or flake at a pH in excess of the isoelectric range of the protein for the purpose of solubilizing the protein. Insoluble material is removed by centrifugation or filtration, and soluble carbohydrate is removed from the resulting lipid-protein emulsion by membrane filtration.

One example of previously employed methods to purify organic materials is found in U.S. Patent 4,477,480, in which the patentees show that starch can be treated with an alkali to remove objectionable flavor components. In a commonly assigned patent, U.S. Patent 4,761,186, ultrafiltration is used to purify starch. In both cases, flavor components are removed from the starch, in the '480 patent by solubilizing the flavor components so that they can be washed out of the relatively insoluble starch. In the '186 patent, ultrafiltration was used to remove the flavor components as permeate, while the insoluble starch remained in an aqueous slurry. By contrast, the present invention separates flavor components from soluble high molecular weight soy proteins.

There are many articles and patents which relate to processing soy materials in order to recover the protein content and which at the same time reduce the flavor compounds to make the proteins more acceptable in food products. However, these previous disclosures were not specifically directed to removal of flavoring compounds and recovering as much of the protein as possible. One example is U.S. Patent 4,420,425 in which protein components of soy are solubilized at a pH of 7 to 11, preferably about 8 and, after ultrafiltration through a membrane having a molecular weight cut off above 70,000, are recovered by spray drying the retained soy proteins. In variants, only a portion of the protein is solubilized at lower pH values and subjected to ultrafiltration with a membrane having a cutoff preferably above 100,000 molecular weight, the product was found to have improved color and flavor. A higher cutoff valve would be expected to result in a loss of valuable proteins, In another patent, U.S. Patent 5,658,714, a soy flour slurry is pH-adjusted to the range of 7 to 10 to solubilize proteins, which are then passed through an ultrafiltration membrane and phytate and aluminum are retained, presumably as solids. While the molecular weight cutoff of the membrane was not given, it is assumed that the pore size was large in order to be able to pass the soluble proteins. Both of these patents contain extensive discussions of the efforts of others in the processing of soy materials; neither teaches or suggests the control of pH during the ultrafiltration process.

In a group of related patents, Mead Johnson Company disclosed processes for solubilizing soy proteins by raising the pH of an aqueous solution of soy materials and recovering the proteins which are said to have a bland taste. The processes are principally directed to concentrating proteins rather than removing flavor compounds. In U.S. Patent 3,995,071, the pH was increased to 10.1 to 14 (preferably 11 to 12) to solubilize soy proteins, after which the pH was lowered to about 6 to 10 and ultrafiltration with a membrane having a molecular weight cutoff of 10.000 to 50,000 Daltons was used to retain the proteins while discarding carbohydrates and minerals. In U.S. Patent 4,072,670, emphasis was placed on removing phytates and phytic acid by solubilizing proteins at a pH of 10.6 to 14 and a temperature of 10 to 50°C to make the phytates and phytic acid insoluble, then separating them and finally acidifying the solution to a pH of about 4 to 5 to precipitate the soy proteins, In U.S. Patent 4,091,120 soy proteins were solubilized at a pH less than 10, preferably 7 to 9 and ultrafiltration was used to separate the proteins as retentate, while passing carbohydrates as permeate. These patents do not teach or suggest control of the pH during the ultrafiltration process.

The present inventors wanted to remove compounds in soy materials which contribute color and flavor and which interfere with the use of soy in certain food products such as beverages, dairy analogs, and the like. They have found that soy-derived materials can be treated successfully using the process to be described below, recovering substantially all of the proteins and rejecting the compounds which cause undesirable color and flavor. Moreover, by controlling the pH within the range of about 9 to about 12 during the ultrafiltration process, deflavored soy materials having improved functional properties can be obtained. Thus, the product is suitable for many food products.

### SUMMARY OF THE INVENTION

Broadly, the invention is a process for preparing an aqueous soy composition having a soy concentration of 1 to 20 percent, which is pH-adjusted to solubilize the protein content and to release the flavoring compounds. Then the composition is subjected to ultrafiltration, while maintaining pH control, using a membrane capable of retaining substantially all of the protein content of the soy while removing flavoring components as permeate.

The deflavored soy materials prepared by the present methods are ideally suited for use in dairy and non-dairy beverages, smoothies, health drinks, confectionary type products, nutritional bars, cheeses, cheese analogs, dairy and non-dairy yogurts, meat and meat analog products, cereals, baked products, snacks, and the like. Especially preferred baked products include pizza crust, cookies, crackers, cereals (flakes, puffed, and the like), and the like. Such preferred baked products are generally prepared by incorporating the deflavored soy materials prepared by the methods described herein into a conventional dough.

In one embodiment, the present invention provides a soy-containing dough comprising a flour-based dough and a deflavored soy protein material, wherein the deflavored soy protein material is prepared by a method comprising:
(a) preparing an aqueous composition of a soy material containing soluble soy proteins, flavoring compounds, and insoluble materials:
(b) solubilizing the soy proteins by adjusting the aqueous composition of (a) to a pH in the range of 9 to 12 and releasing the flavoring compounds;
(c) passing the pH-adjusted aqueous composition of (b) adjacent an ultrafiltration membrane having a molecular weight cutoff up to 50,000 Daltons, while maintaining the pH in the range of 9 to 12, under suitable ultrafiltration conditions wherein the flavor compounds pass through the membrane, thereby deflavoring the soy material and retaining substantially all of the solubilized soy proteins; and
(d) recovering the solubilized soy proteins retained by the ultrafiltration membrane, wherein the recovered solubilized soy proteins is the deflavored soy protein material.

In another embodiment, the present invention provides a soy-containing baked product comprising product prepared from a flour-based dough containing a deflavored soy protein material, wherein the deflavored soy protein material is prepared by a method comprising:
(a) preparing an aqueous composition of a soy material containing soluble soy proteins, flavoring compounds, and insoluble materials;
(b) solubilizing the soy proteins by adjusting the aqueous composition of (a) to a pH in the range of 9 to 12 and releasing the flavoring compounds;
(c) passing the pH-adjusted aqueous composition of (b) adjacent an ultrafiltration membrane having a molecular weight cutoff up to 50,000 Daltons, while maintaining the pH in the range of 9 to 12, under suitable ultrafiltration conditions wherein the flavor compounds pass through the membrane, thereby deflavoring the soy material and retaining substantially all of the solubilized soy proteins; and
(d) recovering the solubilized soy proteins retained by the ultrafiltration membrane, wherein the recovered solubilized soy proteins is the deflavored soy protein material.

In another embodiment, the present invention provides a method of preparing a soy-containing baked product containing a deflavored soy protein material, said method comprising
(1) preparing a soy-containing dough comprising a flour-based dough and a deflavored soy protein material; and
(2) baking the soy-containing dough to form the soy-containing baked product;
wherein the deflavored soy protein material is prepared by a method comprising:
(a) preparing an aqueous composition of a soy material containing soluble soy proteins, flavoring compounds, and insoluble materials;
(b) solubilizing the soy proteins by adjusting the aqueous composition of (a) to a pH in the range of 9 to 12 and releasing the flavoring compounds;
(c) passing the pH-adjusted aqueous composition of (b) adjacent an ultrafiltration membrane having a molecular weight cutoff up to 50,000 Daltons, while maintaining the pH in the range of 9 to 12, under suitable ultrafiltration conditions wherein the flavor compounds pass through the membrane, thereby deflavoring the soy material and retaining substantially all of the solubilized soy proteins; and
(d) recovering the solubilized soy proteins retained by the ultrafiltration membrane, wherein the recovered solubilized soy proteins is the deflavored soy protein material.

In one aspect, the invention is a method of deflavoring soy-derived materials such as soy milk, soy flour, soy concentrates, and soy protein isolates, which method includes preparing an aqueous composition of the soy material containing flavoring compounds, adjusting the pH to the range of

9 to 12 to solubilize the protein content of the soy material and release the flavor components, and then passing the pH-adjusted composition adjacent to an ultrafiltration membrane having pores which provide a molecular weight cutoff up to 50,000 Daltons, while maintaining the pH in the range of 9 to 12, thus retaining substantially all of the protein content, while passing through the pores the flavor producing compounds.

In another aspect, the invention includes adjusting the pH to the range of 9 to 12 with an alkali such as sodium, potassium or calcium hydroxides to solubilize the protein content and releasing the flavor compounds, making it possible to separate such compounds by ultrafiltration. Importantly, the pH is also controlled within the range of 9 to 12 during the ultrafiltration process.

In one embodiment, the invention is a method for deflavoring soy materials in a continuous process wherein a pH-adjusted aqueous mixture of soy materials is passed adjacent an ultrafiltration membrane to separate the flavor components. The pH is maintained at 9 to 12 during the ultrafiltration by the addition of the appropriate amount of an appropriate pH-altering material (generally a base). The permeate containing flavor components and water is passed adjacent a reverse osmosis membrane to dewater the permeate and the separated water is recycled to join recycled retentate and fresh pH-adjusted soy materials. A portion of the retentate is continually removed and the deflavored soy materials recovered.

In a preferred embodiment, the invention is a method for deflavoring soy materials in a batch or semi-continuous process wherein a pH-adjusted aqueous mixture of soy materials is passed adjacent an ultrafiltration membrane, the permeate is separated for recovery of the flavor components, and the retentate is recycled to join fresh pH-adjusted soy materials. Water is added periodically or continuously to replace the water lost to the permeate and to adjust the concentration of soy materials in the combined stream to a predetermined level. If necessary, a pH-altering material (e.g., a base) can be added to the recycled retentate or added water to control the pH to the desired range during the ultrafiltration process. The process is continued until all of the flavoring compounds have been removed.

In another preferred embodiment, the present invention provides a method for preparing deflavored soy protein material, said method comprising:
(a) preparing an aqueous composition of a soy material containing soluble soy proteins, flavoring compounds, and insoluble materials;
(b) solubilizing the soy proteins by adjusting the aqueous composition of (a) to a pH in the range of 9 to 12 and releasing the flavoring compounds;
(c) removing the insoluble materials from the pH-adjusted aqueous composition of (b) to obtain a treated aqueous composition;
(d) passing the treated aqueous composition of (c) adjacent an ultrafiltration membrane having a molecular weight cutoff up to 50,000 Daltons, while maintaining the pH in the range of 9 to 12, under suitable ultrafiltration conditions wherein the flavor compounds pass through the membrane, thereby deflavoring the soy material and retaining substantially all of the solubilized soy proteins; and
(e) recovering the solubilized soy proteins retained by the ultrafiltration membrane to obtain the deflavored soy protein material.

The ultrafiltration membrane used in the method of the invention will have a molecular weight cutoff up to 50,000 Daltons, preferably 1,000 to 50,000, most preferably 10,000 and preferably is a polyethersulfone or ceramic membrane.

### BRIEF DESCRIPTION OF THE DRAWING

FIG. 1 is a graph of the intensity of soy flavor attributes.
FIG. 2 is a graph of the intensity of deflavored soy milk compared to a control sample.
FIG. 3 is a graph of the intensity of another group of soy flavor attributes.
FIG. 4 is a graph of the intensity of deflavored soy concentrate and a control sample compared to the sample of FIG. 3.
FIG. 5 is a graph of the intensity of deflavored soy concentrate and a control sample.
FIG. 6 is a graph showing the change in concentration of flavor compounds between a deflavored soy sample and a control sample.
FIG. 7 is a graph showing the change in concentration of flavor compounds between a deflavored soy sample and a control sample.
FIG. 8 is a block diagram of one process employing the invention.
FIG. 9 is a graph of the intensity of soy isolate flavor attributes.
FIG. 10 is a graph of the intensity of deflavored soy isolate compared to a control sample.
FIG. 11 is a block diagram of a preferred embodiment for preparing the deflavored soy protein material.

### DESCRIPTION OF THE PREFERRED EMBODIMENTS

**Soy-Derived Materials.** Soybeans are valuable sources of oil and, in the present invention, of proteins. Soy beans contain about 40 percent proteins, which have been classified after ultracentrifugation as 2S, 7S, 11S and 15S (see also U.S. Patent 4,420,425). These fractions may contain other materials as well and they have a wide molecular-weight range, from 3,000 to 600,000. It is well known that soy products have undesirable odors and flavors which should be removed in order to make the soy materials widely useful in food products. It is believed that lipoxygenases catalyze the oxidation of certain polyunsaturated fatty acids, producing hydroperoxides which are degraded into volatile carbonyl compounds, associated with objectionable odors and flavors in soy-derived materials. Some of the compounds associated with soy flavors are described in Table C in Example 10 below.

While the protein content of soy-derived materials is considered a valuable fraction for use in food products, soluble carbohydrates are considered undesirable. Their removal from soy protein fractions is an objective in many processes in which the proteins are recovered.

Phytates are compounds which also are considered undesirable in soy proteins. These compounds are calcium-magnesium potassium salts of inositol hexaphosphoric acid. Such compounds are believed to chelate metal ions and are not readily absorbed by the human body. They are considered to bind to soy proteins and interfere with digestion. As mentioned above, removal of phytates has been an objective of workers in the field of soy-derived materials.

**Ultrafiltration Membranes**. Filtration is used to separate many materials. In the present invention, ultrafiltration is used to remove flavoring compounds from soy-derived materials, Importantly, the pH of the soy-derived material should be maintained in the range of 9 to 12 during the ultrafiltration process. Ultrafiltration is intended to remove particles having a size between 10 to 1,000 Angstroms (0.001 to 0.1 µm), corresponding generally to particles having a molecular weight between 10,000 and 1,000.000. and which may also be affected by the shape of such high molecular weight particles. Soy proteins have molecular range between 3,000 and 600,000. A membrane may be chosen which is capable of passing all of the soy proteins or only a selected portion. In the present invention, the soy proteins are retained by the ultra filtration membrane under the selected operating conditions, while the lower molecular weight flavoring compounds pass through the membrane and are separated, thus improving the color and flavor of the retained soy proteins and associated solids.

A polymer ultrafiltration membrane may be defined as an anisotropic (non-uniform) layer. One face is a skin containing pores which determine the size of molecules which can pass through the membrane. Supporting the surface skin is a spongy structure which extends to the opposite face. Such membranes are commonly made by coagulation of polymers in an aqueous bath. Typical polymers which are used include polysulfones, cellulose esters, poly(vinyldenefluoride), poly (dimethylphenylene oxide), poly (acrylonitrile), which can be cast into membranes. Often, the membranes are formed into hollow tubes which are assembled into bundles, through which the solution to be filtered is passed. Alternatively, flat membrane sheets and spiral designs may be used. In commercial practice, pressure is applied to facilitate movement of the lower molecular weight compounds through the membrane. The membrane must be able to withstand the pressures used, making it important that the spongy supporting structure be uniform to avoid breaking the surface skin and bypassing the membrane.

In addition to the polymeric membranes just described, other materials have been used to make ultrafiltration membranes, such as ceramics, sintered metals, and other inorganic materials. The present invention is not limited to any particular type of membrane, In general, the membrane must be able to pass the flavoring compounds, which are believed to have molecular weights lower than 1,000 Dalton. More importantly, the membranes must be able to retain substantially all of the solubilized soy proteins. Thus, the membrane of the invention will have a molecular weight cutoff up to 50,000 Daltons, preferably z 1,000 to 50,000, more preferably 10,000 to 30,000.

**Process.** The process of the invention includes the following steps:
(1) Prepare an aqueous mixture of the soy-derived material;
(2) Add a base to raise the pH of the aqueous mixture to 9 to 12 in order to solubilize the soy proteins and to release the flavoring compounds;
(3) Pass the pH-adjusted mixture, while maintaining the pH in the range of 9 to 12, adjacent to an ultrafiltration membrane having a molecular weight cutoff up to 50,000 Daltons, remove the flavoring compounds as permeate, and remove the remaining soy proteins and other soy materials as retentate; and
(4) Neutralize the retentate and recover the soy proteins.

All types of soy materials are considered to be potential sources of soy for use in food products. Thus, soy materials which contain proteins are combined into an aqueous mixture, generally a slurry of soy solids..The protein content is needed for food products, but as discussed above, it is believed to contain flavoring compounds which must be released in order that they can be separated. The separation of flavoring compounds is carried out in an aqueous mixture in which both the proteins and flavoring compounds are dissolved. The concentration of the soy materials in the aqueous mixture will be in the range of 1 to 20 percent Generally, the concentration of soy materials after pH adjustment will change during the subsequent ultrafiltration step as water is removed with the permeate. The water will be replaced either periodically or continuously. For example, in diafiltration water is added to gradually dilute the retained proteins in a batch or semi-continuous process.

The second step, as will be seen in the examples, is important if removal of the flavoring compounds is to be accomplished. The soy proteins are solubilized by adding a base to the aqueous mixture to achieve a pH of 9 to 12. In general, it has been found that a pH of 9 is needed to solubilize all of the proteins, while a pH higher than 12 is likely to cause undesirable degradation of the proteins. While in theory any base might be used, sodium or potassium hydroxide are preferred, particularly potassium hydroxide. Other bases which may have application include calcium, magnesium and ammonium hydroxides. It is believed that solubilizing the soy proteins changes their shape and in some manner results in releasing the flavoring compounds, which may be bound or encapsulated by the soy proteins when they are in a neutral or acid solution. The flavoring compounds, which have relatively low molecular weight compared to the soy proteins are able to pass through the pores of the ultrafiltration membrane, while substantially all of the solubilized soy proteins are too large and are retained. Importantly, the pH should be maintained within the just described range (i.e., 9 to - 12) during the ultrafiltration/diafiltration process to allow as much of the flavoring compounds as possible to be removed.

The third step could be carried out in a batch manner similar to the laboratory experiments reported below in Examples 1-5 in which the flavor compounds and water passed through the membrane and were removed by flowing water. However, in commercial applications of the process of the invention, the pH-adjusted aqueous mixture would be circulated continuously adjacent to an ultrafiltration membrane. Since water, the caustic and the flavoring compounds pass through the membrane as permeate and are discarded, additional water will be added to maintain the desired concentration of soy materials, which will tend to lower the pH of the aqueous mixture. This water may be augmented by dewatering the permeate and recycling the recovered water to the feed stream. A pH-modifying material (e.g., base) can be added as necessary to control the pH in the desired range (i.e., 9 to 12) directly to the ultrafiltration solution, to any recycled aqueous material, or to makeup water as desired.

After removal of the flavoring compounds (i.e., after completion of the ultrafiltration process), further neutralization of the filtered solution may be accomplished by withdrawing product and adding an acid as required to reach the desired pH. After pH adjustment, the aqueous mixture of soy proteins and other materials may be used directly in food products, or it may be concentrated or dried as required for the intended use.

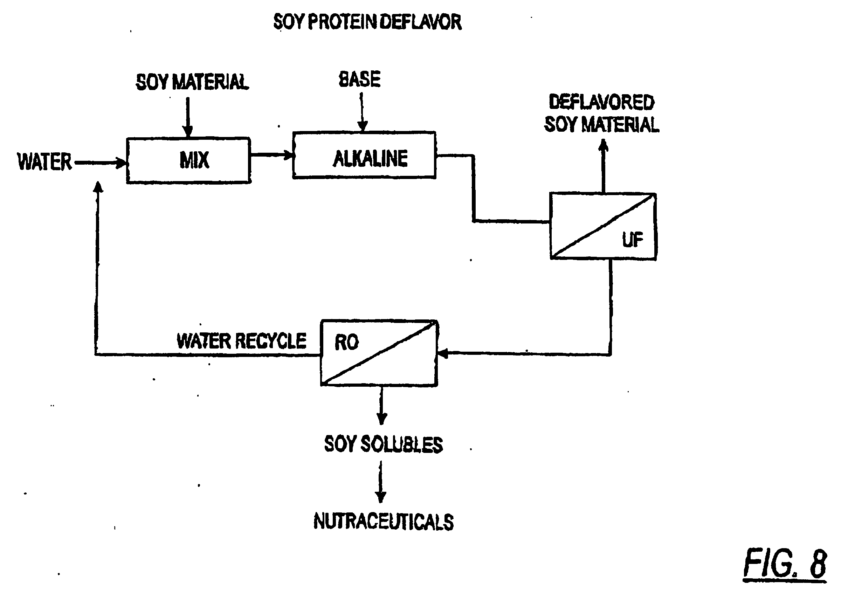

A process for deflavoring soy materials by ultrafiltration may be operated in various ways. The pH during the ultrafiltration/diafiltration process is maintained in the range of 9 to 12, and preferably in the range of 9.5 to 10.5. Two methods will be described, continuous processing and batch (including semi-continuous operation) processing. It is expected that commercial processes will adopt batch or semi-continuous operation, which should be better suited to production of food-grade soy products. A continuous process is generally shown in FIG. 8. In either a continuous or batch process an aqueous mixture of soy materials is pH adjusted to solubilize soy proteins and release flavor compounds and then passed adjacent an ultrafiltration membrane which permits the lower molecular weight flavoring materials to pass through its pores along with water (the permeate), leaving the higher molecular weight soy materials (the retentate) to be recirculated. A portion of the retentate will be withdrawn as deflavored product, from which the soy materials can be recovered as needed for the ultimate end use. Water will be added to replace that lost in the permeate and to provide a constant concentration of soy materials in the feed stream supplied to the ultrafiltration membrane. Although not essential to the process, the process of FIG. 8 includes additional processing of the permeate to recover a portion of the water using a reverse osmosis membrane for recycling to join the retentate and fresh soy materials. The advantage of such a step is in reducing the amount of fresh water which must be added to the process and removed in concentrating the permeate. Of course, the pH of the soy-derived materials can be kept within the desired range by appropriate addition of a base to the recycled or fresh water added to the process or by direct addition of base as desired.

In a batch process, such as those described in Examples 6-8 below, a batch of soy material is placed in a vessel, pH adjusted, and fed to an ultrafiltration membrane. The permeate is separated and the retentate is returned to the vessel. As the process proceeds, the soy material is depleted in the lower molecular weight flavoring compounds and water and becomes more concentrated in the desirable soy proteins. Periodically, water is added to the retentate to dilute it and provide a carrier for the flavoring compounds which are passed through the membrane. In a semi-continuous process the water is added continuously at the rate it is being removed in the permeate. The process is continued until all of the flavoring compounds have been removed and the retentate is sufficiently deflavored to become the product, which can be further processed as required for the ultimate end use. A batch or semi-continuous process may also include the concentration of the permeate, with recycle of separated water in a similar manner as that shown in FIG. 8. The pH during the ultrafiltration/diafiltration process is maintained in the range of 9 to 12, and preferably in the range of 9.5 to 10.5.

The ultrafiltration membrane will be operated with a pressure differential across the membrane which assists migration of the flavoring compounds, water and other materials which are capable of passing through the pores of the membrane, while not exceeding the physical strength of the membrane. Typical average pressure for such membranes are 50 psi (345 kPa). The trans-membrane pressure (in versus out) will be 15 psi (103 kPa). Of course, these pressures could be varied based on the membrane's specifications and other operational concerns. The flow rate of the feed stream will provide sufficient residence time for significant permeate removal, but also will be high enough to provide turbulence so that the access of the feed stream to the membrane pores will not be hindered by solid deposits on the membrane walls. One skilled in the art will understand that suitable operating parameters will be determined by experience with the materials being separated.

In a preferred embodiment, the present invention provides a method for preparing deflavored soy protein material, said method comprising; (a) preparing an aqueous composition of a soy material containing soluble soy proteins, flavoring compounds, and insoluble materials; (b) solubilizing the soy proteins by adjusting the aqueous composition of (a) to a pH in the range of 9 to 12 and releasing the flavoring compounds; (c) removing the insoluble materials from the pH-adjusted aqueous composition of (b) to obtain a treated aqueous composition; (d) passing the treated aqueous composition of (c) adjacent an ultrafiltration membrane having a molecular weight cutoff up to 50,000 Daltons, while maintaining the pH in the range of 9 to 12, under suitable ultrafiltration conditions wherein the flavor compounds pass through the membrane, thereby deflavoring the soy material and retaining substantially all of the solubilized soy proteins; and (e) recovering the solubilized soy proteins retained by the ultrafiltration membrane to obtain the deflavored soy protein material. This preferred embodiment is described in more detail in copending U.S. Patent Application Serial Number , 10/655,259 filed on the same day as the present application.

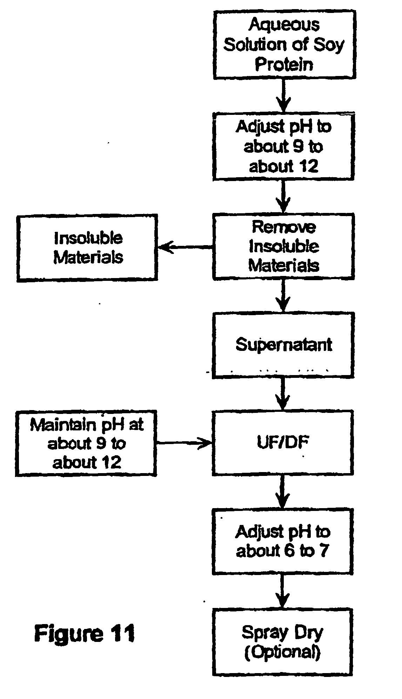

This preferred embodiment is illustrated in FIG. 11 wherein the pH of an aqueous solution of soy protein is adjusted to 9 to 12. The pH-adjusted aqueous solution is then treated to remove insoluble materials. Any conventional technique (e.g., filtration, decantation, centrifugation, and the like) can be used. Preferably, the insoluble material is removed by centrifugation. Commercial available continuous centrifugation units are ideally suited for this separation in a semi-batch or continuous type operation. In an especially preferred embodiment, the pH-adjusted aqueous solution is subjected to the removal technique (e.g., centrifugation) at least twice in order facilitate or more complete removal of insoluble materials. The treated supernatant is then subjected to ultrafiltration, preferably combined with diafiltration, in order to remove the flavor components normally associated with soybeans. During ultrafiltration, the pH of the soy-derived material should be maintained in the range of 9 to 12. After ultrafiltration, the pH is adjusted to a neutral pH using an edible acid (e.g., citric acid). The deflavored soy protein solution may be used directly or it may be converted to a solid form if desired. Any conventional technique for removing water can be used. Generally, spray or freeze drying techniques are preferred..

**Deflavored Soy Products.** The deflavored soy materials prepared by the present methods are ideally suited for use in dairy and non-dairy beverages, smoothies, health drinks, cheeses, cheese analogs, dairy and non-dairy yogurts, meat and meat analog products, cereals, baked products, snacks, and the like. Especially preferred baked products include pizza crust, cookies, crackers, cereals (flakes, puffed, and the like), and the like. Such preferred baked products are generally prepared by incorporating the deflavored soy materials prepared by the methods described herein into a conventional dough.

Although solid forms of the deflavored soy materials (e.g., soy protein isolate or concentrates) are preferably used, aqueous solutions or slurries of the deflavored soy materials can also be used so long as the amount of water used to prepare the dough is adjusted to take into account the water added with the aqueous soy material solutions or slurries. Dough containing up to 30 percent soy protein isolate or concentrate can be used in the present invention. More preferably, the dough contains 5 to 25 percent of a solid form of soy protein isolate or concentrate. The soy-containing dough can be baked using convention techniques and equipment to prepare the deflavored soy protein baked products of this invention.

Unless noted otherwise, all percentages are by weight

**EXAMPLE 1**. Soy protein isolate (Protein Technology International (PTI); St. Louis, MO) was hydrated in tap water to provide a concentration of 10 percent. The aqueous composition was mixed with a magnetic stirrer until all of the soy protein isolate was completely dispersed. The pH of the mixture was adjusted to 11.0 using sodium hydroxide. Then, the pH-adjusted composition was placed in a dialysis tube (Spectrum, Inc.) having a 3500 molecular weight pore size and tap water was passed over the outside of the tube continuously for about 4 hours; the pH remained greater than about 9 during dialysis. The composition remaining in the dialysis tube was poured into a glass beaker, neutralized, and evaluated for aroma and taste. A comparison was made with the dialyzed composition and a sample treated in a similar manner, but which had a pH of 6.7 and a second sample which had been neither dialyzed nor pH-adjusted. Blind evaluation by several individuals showed that only the pH-adjusted and dialyzed sample had significantly improved taste and aroma.

**EXAMPLE 2.** A similar test was carried out using soy milk (Devansoy Farms, Carrol, Iowa) made into a 10 percent aqueous composition and then pH-adjusted and dialyzed overnight as in Example 1. After the treatment, the pH of the sample was 8.8 and the aroma and taste were significantly improved.

**EXAMPLE 3**. Example 2 was repeated with soy milk freshly prepared by soaking and blanching the beans and then grinding and separating the soy milk from the meal. After pH adjustment and dialysis as previously described, it was found that the taste and aroma of the soy milk was significantly improved.

**EXAMPLE 4**. Example 3 was repeated using a dialysis tube having a pore size of 6000 molecular weight and similar results were obtained.

**EXAMPLE 5.** Example 2 was repeated with dry soy flour (Cargill). The soy flour was hydrated to a 10 percent composition and then pH-adjusted as previously described. After dialyzing overnight the pH of the remaining composition in the dialysis tube had a pH of 8.7 and had significantly improved aroma and taste.

**EXAMPLE 6**. In a large mixing tank 33 pounds (15 kg) of Sun Rich soy milk containing 15 percent solids was diluted with 66 pounds (30 kg) of water to produce a slurry of 100 pounds (45 kg) containing 5 percent soy solids. A 1N NaOH solution was added slowly to solubilize the soy proteins until a pH of 11 was reached.

A diafiltration of the alkalized soy solution was carried out by pumping the solution from the mixing tank through two parallel hollow fiber membranes (A/G Technology Corporation) having a molecular weight cutoff of 10,000 Daltons and a surface area of 3.3 m². The pH was maintained at 9 to 12 during diafiltration. The trans-membrane pressure across the membranes was 20-50 psi (138-345 kPa). The material passed through the membrane (permeate) was collected. The remaining material (retentate) was continuously recycled to the mixing tank. When 50 pounds (22.7 kg) of permeate had been collected, the mixing tank contained 50 pounds (22.7 kg) of soy solution. An additional 50 pounds (22.7 kg) of water was added to the mixing tank. This washing with addition of water to the mixing tank was repeated five times, after which the solution in the mixing tank was concentrated to 10 percent solids as water was removed in the permeate and then the retained soy solution was neutralized with 2 percent citric acid to a pH of 7.0.

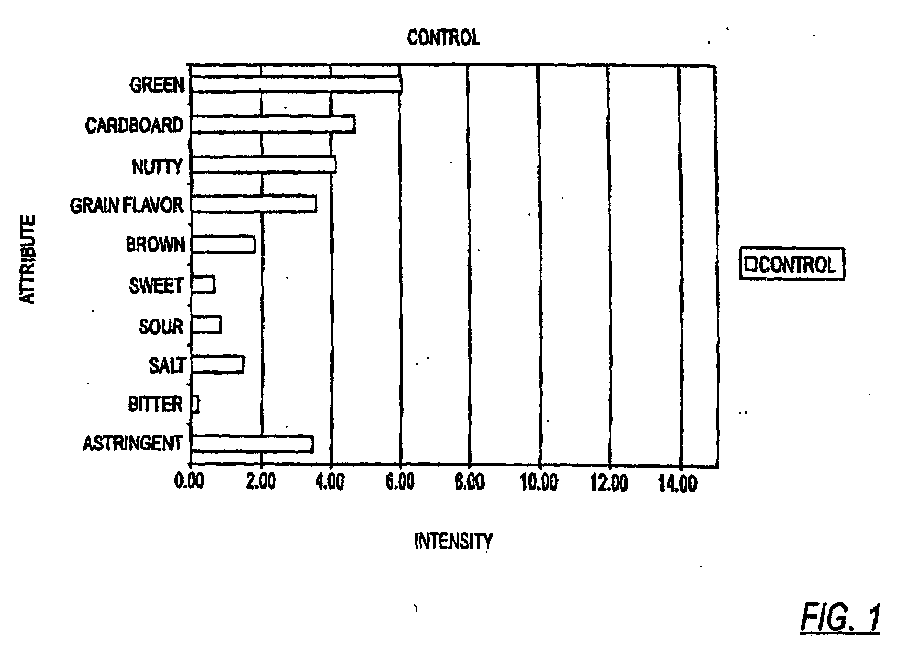

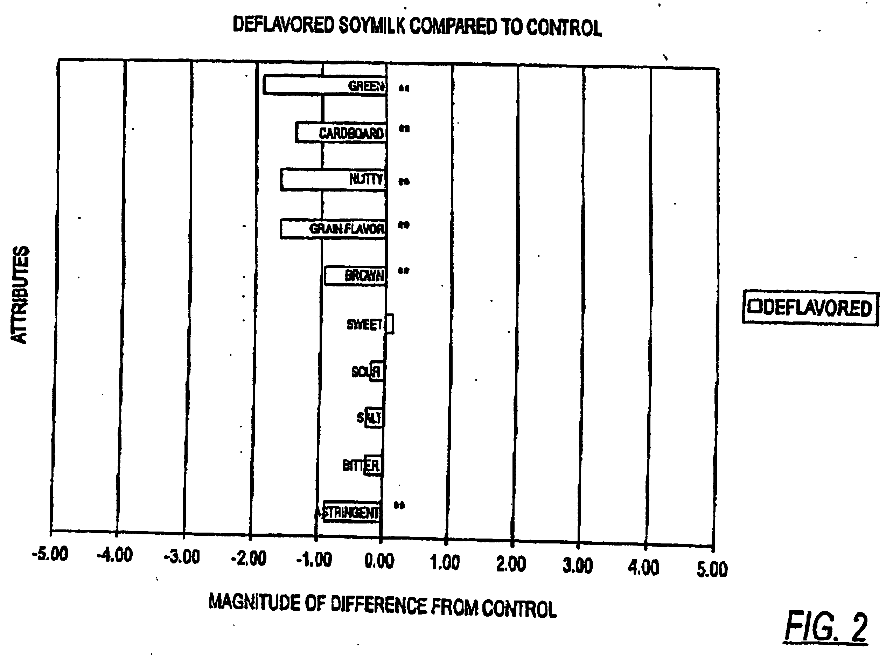

The neutralized solution was evaluated by a trained sensory panel and compared with a control sample of Sun Rich soy milk which had been diluted to 10 percent with water, but not otherwise treated. The soy solutions were presented in a blind and randomized order. The results are shown in the graphs of FIGS. 1 and 2.

FIG. 1 shows the mean intensity score for 10 attributes. The panel judged certain attributes to be more significant than others. When compared to the soy solution which had been treated as described above, the outstanding attributes had all been reduced with a 95 percent confidence level. Those attributes which had less prominent in the control (i.e., Brown, Sweet, Sour, Salt and Bitter) were reduced, except for Sweet which increased in value, but the panel mean values did not reach a 95 percent confidence level.

It is clear from the results that the soy solution had been rendered more neutral in flavor by removal of flavor components.

**EXAMPLE 7**. Ten pounds (4.55 kg) of a soy protein concentrate (Central Soya) was mixed with 190 pounds (86.4 kg) of water in a tank with high agitation for 15-30 minutes to hydrate the soy protein. Then 1 N NaOH was added to solubilize the soy protein to a pH of 11. In a similar manner to that described in Example 6 the soy slurry was pumped through a spiral membrane (Gea Niro Inc.) having a molecular weight cutoff of 10,000 Daltons. The trans-membrane pressure across the membrane was maintained below 50 psi (344.7 kPa) and the pH was maintained at 9 to 12. The pressure drop through the membrane was maintained below 15 psi (103.4 kPa). As in Example 6, five additions of water were made when the permeate withdrawn from the membrane reached one-half of the original volume in the mixing tank. After five water additions the pH of the washed soy solution was adjusted to 7.5 by adding 0.5 N HCl and then freeze dried for sensory evaluation.

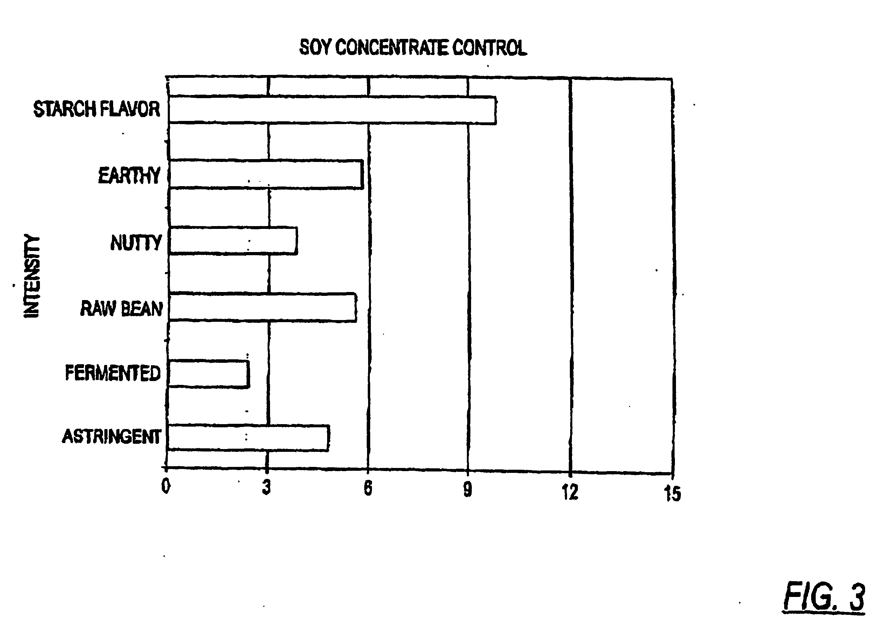

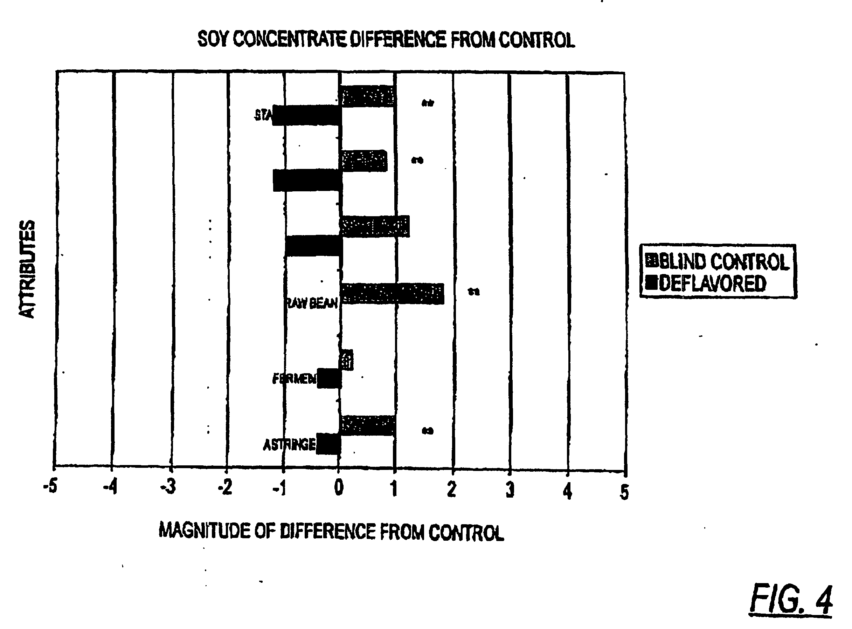

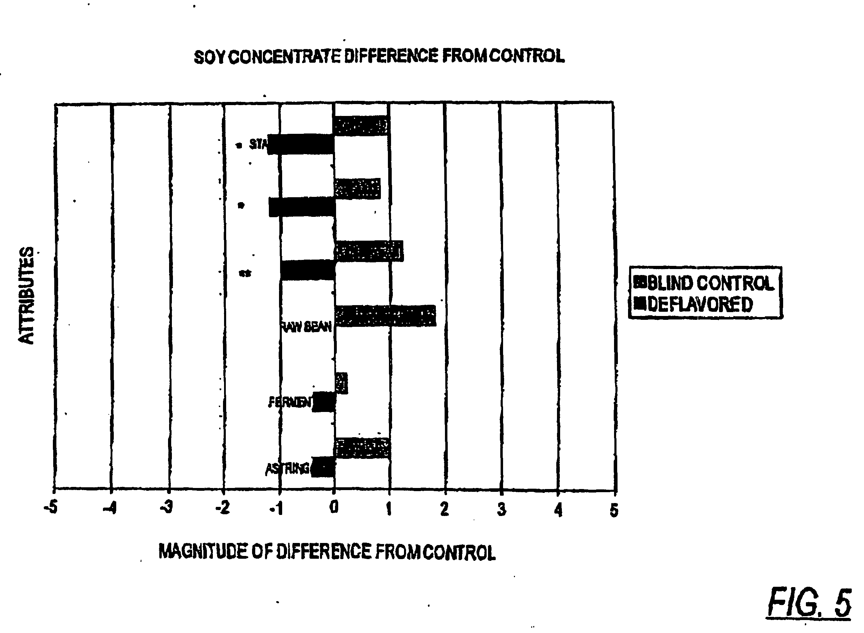

The deflavored soy protein concentrate was evaluated for six attributes by a trained sensory panel. The mean values for each attribute for the control sample (untreated) are given in FIG. 3. In this example a difference was found between the deflavored soy concentrate and the control, but none were at the 95 percent confidence level, although all the values were lower. This is shown in FIG. 4. Also included are the results of a blind control used, which was rated after the deflavored sample. In this case, the blind control was found to have stronger flavor attributes than the original control of FIG. 3. It is believed that this occurred because the blind control in this example was tested after the deflavored sample and appeared to the panel to have a relatively stronger flavor in the second evaluation of the control. However, when compared with the blind control sample, the deflavored sample showed significant differences for three of the flavor attributes at the 90 to 95 percent confidence level, as shown in FIG. 5.

**EXAMPLE 8**. The membrane used to deflavor soy proteins should have a molecular weight cutoff of 10,000 Daltons, shown to be effective in Examples 6 and 7. A higher molecular weight cutoff membrane can be used if desired, but at a molecular weight cutoff of 50,000 Daltons some valuable proteins have been lost in the permeate, as is shown in this example.

Five pounds (2.27 kg) is a dry soy isolate (Supro-670 PTI) was mixed with 95 pounds (43.2 kg) of water as in Example 7 to provide a slurry containing 5 percent soy solids. 1 N NaOH was added to raise the pH to 11 and solubilize the soy proteins. Diafiltration using five additions of water was carried out in a manner similar to that described in Examples 6 and 7 and using the hollow fiber membranes of Example 6. The pH was maintained at about 9 to about 12 during diafiltration. Samples of the permeate were taken at five minute intervals, neutralized and frozen for protein analysis.

The permeate samples were analyzed for total protein content by electrophoresis, with the results shown in the following table:

**TABLE A:**

| | | |
|---|---|---|
| Time (minutes) | Molecular Weight Cutoff | |
| | 10.000 Daltons | 50,000 Daltons |
| | Protein (%) | Protein (%) |
| 0 | 0 | 0.4 |
| 5 | 0.6 | 1 |
| 10 | 0.8 | 0.6 |
| 15 | 0.4 | 0.8 |
| 20 | 0.4 | 0.6 |
| 25 | 0 | 0.4 |
| 30 | 0 | 0.4 |
| 35 | 0.6 | 0.4 |
| 40 | 0 | 0.3 |
| 45 | 0 | N/A |

It can be seen that the membrane having a 10,000 Dalton cutoff retains more protein than the membrane having a 50,000 Dalton cutoff. The value at 35 minutes for the 10,000 Dalton membrane is believed to be erroneous.

**EXAMPLE 9**. Samples of soy materials deflavored using the methods of Examples 6-8 were analyzed by protein gel electrophoresis. The results indicate that the molecular weight distribution of the retained soy materials was substantially the same as that of the original soy material. The results are shown in the following table:

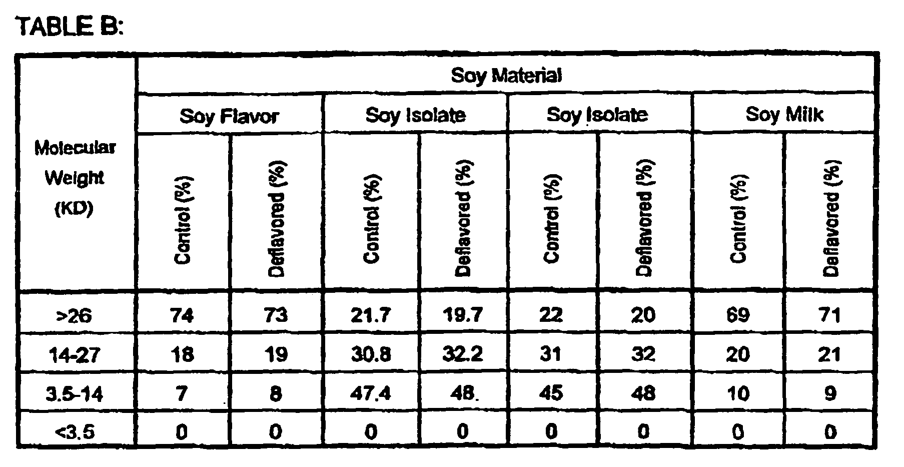

**EXAMPLE 10**. Analysis were carried out for the chemical constituents associated with the flavor attributes determined by the sensory panels described in previous examples. Two samples of soy protein isolates were tested. One sample had been deflavored by the method described in Example 7; the second sample had not been deflavored.

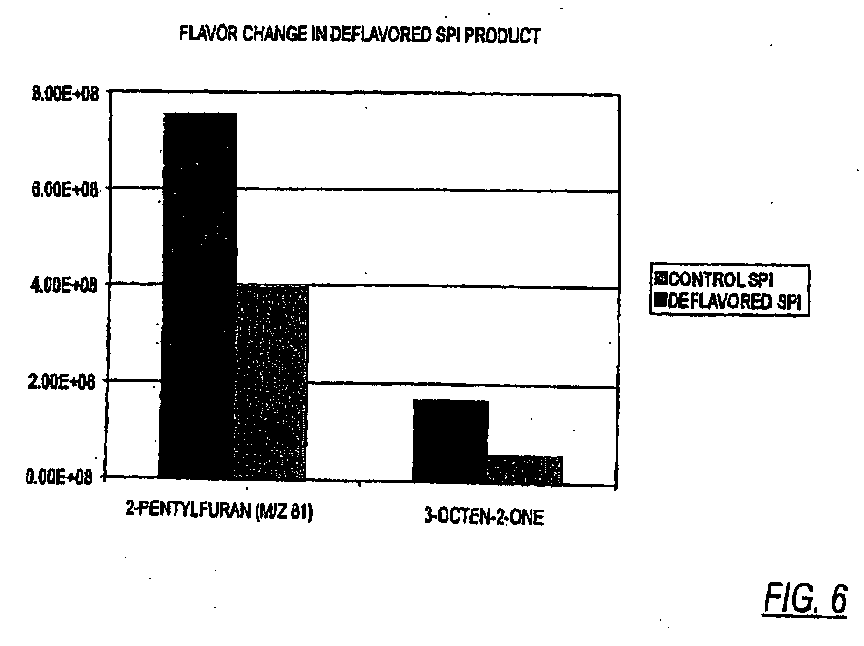

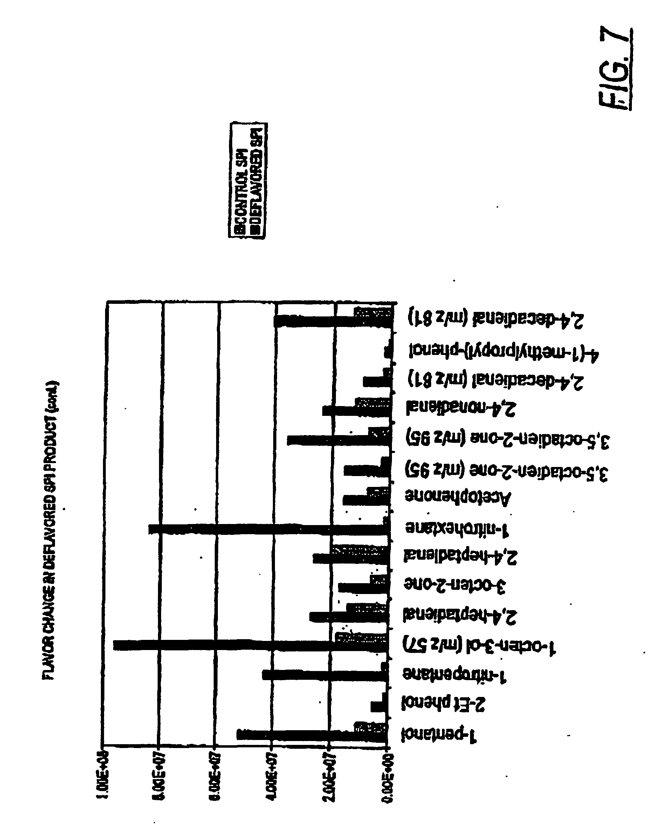

In a first test, one gram of a control sample was diluted with 15 g of water, 2 µl of 300 ppm of 4-heptanone was added as an internal standard, and the mixture was purged with 100 ml/min of helium at 60°C for 30 min. A deflavored sample was prepared similarly as the control sample, except that the pH was raised to 10 by adding a NaOH solution in order to solubilize the proteins. The volatile compounds were analyzed by GC/MS (HP GC5890/MSD5972). The results for various compounds are shown in FIGS. 6 and 7. The deflavored soy sample contained smaller amounts of the flavoring compounds.

In a second test, three gram samples were diluted with 30 g of water and 2 µl of 300 ppm 4-heptanone was added as an internal standard. The resulting mixtures were purged with 100 ml/min of helium at 60°C for 20 min to remove the volatile compounds. The volatiles were analyzed by gas chromatography and the odor of the compounds judged by human criteria. The odors associated with specific chemical compounds are reported in the following table:

**TABLE C: Odor Characteristics of Decreased Compounds After Deflavoring Process.**

| Compound | Odor in SPI Control | Odor in Deflavored SPI |
|---|---|---|
| 1-pentanol | faint, green | weakly fatty |
| 2-ethylphenol | spicy, herbaceous | ND |
| 1-nitropentane | ND | ND |
| 1-octen-3-ol | mushroom, earthy, very strong | mushroom, earthy, strong |
| *cis*-2,4-heptadienal | ND | ND |
| cis-3-octen-2-one | ND | ND |
| trans-2,4-heptadienal | ND | weak green |
| acetophenone | burnt, floral, caramel | burnt, caramel |
| *cis*, *trans*-3,6-octadien-2-one | ND | ND |
| *trans, trans-*3,5-octadien-2-one | green, floral, fatty | fatty, green |
| 2,4-nonadienal | fatty, oily, deep-fried | fatty, oily, deep-fried |
| *cis*-2,4-decadienal | fatty, oily, musty | green onion, painty |
| 4-(1-methylpropyl)- phenol | bubblegum, fruity | ND |
| *trans*-2,4-decadienal | fatty, oily, waxy | fatty, oily, green |
| 2-pentylfuran | green, floral, etherous | green, floral, etherous |
| tlans-3-octen-2-one | floral, green, earthy | floral |

**EXAMPLE 11**. Application of soy materials to food products was illustrated by adding deflavored soy material to a Balance Bar® (Kraft Foods) and comparing the flavor with an equivalent Balance Bar® containing the same soy material, but which had not been deflavored. In one sample all of the soy material was a dry soy isolate (Supro-661 from PTI), in the second sample 50 percent of the soy material had been deflavored by the diafiltration process of the examples and 50 percent was not deflavored. A taste panel preferred the second sample 8 to 3, scoring 6.11 on a scale of 1-10 (with 10 being the best), versus a score of 3.5 for the first sample.

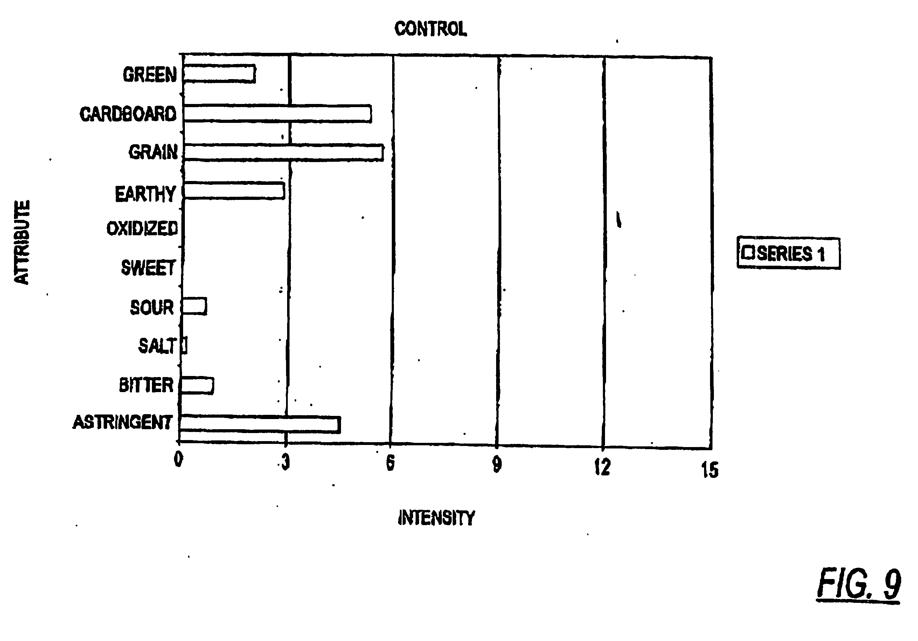

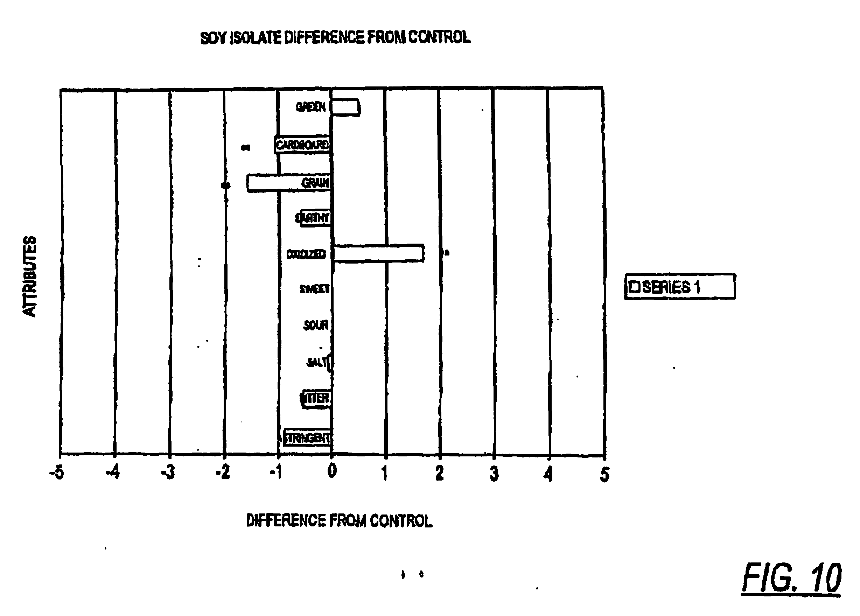

**EXAMPLE 12** In a manner similar to Example 6, samples of soy isolate were compared, deflavored according to the process of the invention and the control sample of soy isolate, concentrated in proteins was hydrated in water to a 10 percent solution. FIG. 9 shows the results found by a trained sensory panel for the control sample. The deflavored sample was compared to the control by the panel, which found, as can be seen in FIG. 10, that many of the characteristic attributes of the control sample had been reduced. However, it was found that the flavor designated oxidized had increased.

**EXAMPLE 13**. Thirty pounds of a soy protein isolate (Surpo^{™} 710 from PTI) was mixed with 270 pounds water in a tank with high agitation for 20 to 30 minutes to hydrate the soy protein. NaOH (1N) was added to adjust the pH to 10. In a similar manner to that described in Example 7, the soy slurry was subjected to ultrafiltration/diafiltration at 120°F through a spiral membrane (Gea Niro Inc.) having a molecular weight cutoff of 10,000 Daltons; water was added continuously at the same rate as permeate removal and the retentate was recirculated to the tank. The pH was maintained at 9 to 12 during ultrafiltration. Ultrafiltration/diafiltration was continued until the amount of permeate collected was equal to 5 washes (each wash was about half of the initial starting volume). After completion, the pH of the deflavored soy solution was adjusted to 6.5 by adding 1 percent citric acid. The solid deflavored soy material was collected after spray drying.

**Example 14**. This example illustrates the preparation of high protein snacks and cereals using the deflavored soy isolate of Example 13. These products delivered 15 to 18 g protein per serving size (30 g).

A first dough sample was prepared containing 34.0 percent deflavored soy isolate, 1.9 percent starch, 56.6 percent water, 0.3 percent salt, 1.9 percent double acting baking soda, and 5.3 percent wheat flour. The dough was prepared by mixing the dry ingredients in a mixer for 2 minutes and then slowly adding water with mixing over an 5 minute period. The dough was then kneaded for 5 minutes. The resulting dough was balled and then flattened using a pasta roller, the resulting flakes were about the size of dimes. The sample was baked for 7 minutes at 400°F to achieve a crisp product which became somewhat chewy upon cooling. No off-flavors were detected.

A second dough sample was prepared starting with the dough from the first dough sample above and having the following formulation: 650 g of dough from first sample; 65 g sugar, and 70 g wheat flour. Thus, the second dough sample had an overall formation as follows: 28.5 percent deflavored soy isolate, 1.6 percent starch, 47.5 percent water, 0.3 percent salt, 1.6 percent double acting baking soda, 12.2 percent wheat flour, and 8.4 percent sugar. The sugar was first blended into the dough, which became sticky. Blending the additional wheat flour into the sticky dough significantly reduced the stickiness. Several different shaped samples were made with the dough as follows: (1) formed dough balls and then flattened (average diameter of 0.75 inches when flattened); (2) formed large flat sheet (12 by 18 inches; (3) formed small squares (0.8 inches on a side); and (4) formed small balls (non-flattened; 0.3 inches in diameter). Samples were baked in a conventional oven at 280°F for 12 minutes. Excellent puffed samples were obtained which were light and crispy (slightly crunchy) with no detectable soy flavor.

A third dough sample was prepared by adding 2 percent soybean oil to the second dough sample. The dough was sheeted (linguine type) and then baked in a conventional oven at 280°F for 12 minutes. Excellent puffed samples were obtained which were light and crispy (slightly crunchy) with no detectable soy flavor.

**Example 15**. This examples illustrates the preparing of snacks and breakfast cereals having 10 g protein per 30 g serving size. The deflavored soy isolate of Example 13 was used. A dough having the following formation was prepared:

| Ingredient | Amount (g) | Amount(%) |
|---|---|---|
| Water | 420 | 47.9 |
| Deflavored Soy Isolate | 181.5 | 20.7 |
| Wheat Flour | 210.4 | 24.0 |
| Baking Powder | 4.7 | 0.5 |
| Salt | 5.5 | 0.6 |
| Sugar | 55 | 6.3 |

The dough was prepared as in Example 14 and then split into four batches. The first and second batches were formed into flattened circular shapes (0.8 inches in diameter). The second batch were prepared in a manner similar to the first batch except that the samples were docked in the center to prevent puffing during baking. The third batch was formed into balls (0.25 inches in diameter). The forth batch was cooked in pressured steam cooker for 20 minutes, cut into 0.5 inch grits, and then flaked in a roller flaker before baking. All batches were then baked at 350°F for 15 minutes.

Samples from batches 1-3 produced very good products which had a very good crunchy texture. Puffed samples (batches 1 and 3) were excellent, forming the desired puffed shapes; the sample from batch 2 was similar except it was not puffed as expected. The sample from batch 4 (pre-cooked dough) was easier to flake than non-cooked dough. All samples provided very good results with a crispy (slightly crunchy) texture which holds up well in milk (i.e., stays crunchy for an acceptable time period - i.e., 20 minutes as compared to 5 minutes for most conventional breakfast cereals); the puffed samples floated in the milk.

**Example 16**. The samples from Example 15 were topically flavored to product a wide variety of snacks and breakfast cereals by spray coating the baked pieces with vegetable oil and then tumbling with the desired spices and flavors. Spices and flavors included the following: (1) pizza spice blend; (2) Italian savory (garlic, oregano, parsley, salt); (3) Mexican spice blend; (4) sugar glaze (candy type); (5) icing sugar; and (6) cocoa and icing sugar blend. All products had excellent taste profiles with no off flavors and were crispy and airy. The puffed type products floated in milk an did not get soggy for over 20 minutes as compared to conventional breakfast cereals.

**Example 17**. This example demonstrates the preparation of pizza dough prepared with deflavored soy isolate from Example 13 and having the following formulation:

| **Ingredient** | **Amount (g)** | **Amount (%)** |
|---|---|---|
| Water | 420 | 46.9 |
| Deflavored Soy Isolate | 182 | 20.3 |
| Wheat Flour | 210 | 23.4 |
| Baking Powder | 4.7 | 0.5 |
| Dry Yeast | 4.0 | 0.4 |
| Salt | 5.5 | 0.6 |
| Sugar | 40 | 4.5 |
| Vegetable Oil | 30 | 3.4 |

Dry ingredients were blended in the Hobart mixer for 5 minutes, at which time water and oil were slowly added and mixing continued for 10 minutes to form the dough. The dough was sheeted and then baked at 450°F for 12 minutes. Final baked pizza dough had excellent texture and flavor. No off flavors were detected.

**Example 18**. This example demonstrates the preparation of chocolate chip cookies using the deflavored soy isolate of Example 13 and having the following formulation:

| **Ingredient** | **Amount (g)** | **Amount (%)** |
|---|---|---|
| Deflavored Soy Isolate | 95 | 17.2 |
| Soft Wheat Flour | 95 | 17.2 |
| Shortening | 120 | 21.7 |
| Granulated Sugar | 50 | 9.0 |
| Brown sugar | 50 | 9.0 |
| Liquid eggs | 90 | 16.2 |
| Salt | 2 | 0.4 |
| Sodium Bicarbonate | 5 | 0.9 |
| Chocolate Chips | 47 | 8.5 |

The dough was prepared by melting the shortening with both the granulated and brown sugars. After cooling the mixture to room temperature, the liquid eggs were blended into the mixture to form a melted blend. The dry ingredients were mixed in a Hobart mixer for 5 minutes. The pre-melted blend was then added to the dry ingredients and mixing continued for 10 minutes. The resulting dough was formed into balls, placed on a cookie sheet, and then baked at 350°F for 17minutes.

The resulting chocolate chip cookies were considered excellent with a very moist mouth feel with no soy flavors. Each cookie (20 g) would provide 3 g protein.

## Claims

1. A soy-containing dough comprising a flour-based dough and a deflavored soy protein material, wherein the deflavored soy protein material is prepared by a method comprising:
(a) preparing an aqueous composition of a soy material containing soluble soy proteins, flavoring compounds, and insoluble materials;
(b) solubilizing the soy proteins by adjusting the aqueous composition of (a) to a pH in the range of 9 to 12 and releasing the flavoring compounds;
(c) passing the pH-adjusted aqueous composition of (b) adjacent an ultrafiltration membrane having a molecular weight cutoff up to 50,000 Daltons, while maintaining the pH in the range of 9 to 12, under suitable ultrafiltration conditions wherein the flavor compounds pass through the membrane, thereby deflavoring the soy material and retaining substantially all of the solubilized soy proteins; and
(d) recovering the solubilized soy proteins retained by the ultrafiltration membrane, wherein the recovered solubilized soy proteins is the deflavored soy protein material.

2. The soy-containing dough of Claim 1, wherein the soy material is at least one member of the group consisting of soy milk, soy protein isolate, soy concentrate, and soy flour.

3. The soy-containing dough of Claim 1 or Claim 2, wherein the deflavored soy protein material used to prepare the dough is in a solid form.

4. The soy-containing dough of any one of Claims 1 to 3, wherein the aqueous composition of (a) has a concentration of soy material in the range of 1 to 20 percent.

5. The soy-containing dough of any one of Claims 1 to 4, wherein the ultrafiltration membrane has a cutoff in the range of 1,000 to 50,000 Daltons.

6. The soy-containing dough of any one of Claims 1 to 5, wherein the ultrafiltration membrane has a cutoff in the range of 10,000 to 30,000 Daltons.

7. The soy-containing dough of any one of Claims 1 to 6, wherein the ultrafiltration is carried out at a temperature in the range of 10 to 60°C and a suitable pressure.

8. The soy-containing dough of any one of Claims 1 to 7, wherein the ultrafiltration membrane is a polymer, ceramic, or inorganic membrane.

9. The soy-containing dough of any one of Claims 1 to 8, wherein the soy-containing dough is a pizza dough, a cookie dough, a cracker dough, or a cereal dough.

10. A soy-containing baked product comprising a product prepared from the soy-containing dough of any one of Claims 1 to 9.

11. A method of preparing a soy-containing baked product containing a deflavored soy protein material, said method comprising
(1) preparing a soy-containing dough comprising a flour-based dough and a deflavored soy protein material; and
(2) baking the soy-containing dough to form the soy-containing baked product;
wherein the deflavored soy protein material is prepared by a method comprising:
(a) preparing an aqueous composition of a soy material containing soluble soy proteins, flavoring compounds, and insoluble materials;
(b) solubilizing the soy proteins by adjusting the aqueous composition of (a) to a pH in the range of 9 to 12 and releasing the flavoring compounds;
(c) passing the pH-adjusted aqueous composition of (b) adjacent an ultrafiltration membrane having a molecular weight cutoff up to 50,000 Daltons, while maintaining the pH in the range of 9 to 12, under suitable ultrafiltration conditions wherein the flavor compounds pass through the membrane, thereby deflavoring the soy material and retaining substantially all of the solubilized soy proteins; and
(d) recovering the solubilized soy proteins retained by the ultrafiltration membrane, wherein the recovered solubilized soy proteins is the deflavored soy protein material.

12. The method of Claim 11, wherein the soy material is at least one member of the group consisting of soy milk, soy protein isolate, soy concentrate, and soy flour.

13. The method of Claims 11 or 12, wherein the deflavored soy protein material contained in the dough is in a solid form.

14. The method of any one of Claims 11 to 13, wherein the aqueous composition of (a) has a concentration of soy material in the range of 1 to 20 percent.

15. The method of any one of Claims 11 to 14, wherein the ultrafiltration membrane has a cutoff in the range of 1,000 to 50,000 Daltons.

16. The method of any one of Claims 11 to 15, wherein the ultrafiltration membrane has a cutoff in the range of 10,000 to 30,000 Daltons.

17. The method of any one of Claims 11 to 16, wherein the ultrafiltration is carried out at a temperature in the range of 10 to 60°C and a suitable pressure.

18. The method of any one of Claims 11 to 17, wherein the ultrafiltration membrane is a polymer, ceramic, or inorganic membrane.

19. The method of any one of Claims 11 to 18, wherein the soy-containing baked product is a pizza crust, a cookie, a cracker, or a cereal.

## Patentansprüche

1. Soja enthaltender Teig mit einem Teig auf Mehlbasis und einem geschmacksentzogenen Sojaproteinmaterial, das durch ein Verfahren hergestellt ist, bei dem man
(a) eine wässrige Zusammensetzung eines Sojamaterials herstellt, das lösliche Sojaproteine, Geschmacksverbindungen und unlösliche Materialien enthält,
(b) die Sojaproteine dadurch löslich macht, daß man die wässrige Zusammensetzung von (a) auf einen pH in dem Bereich von 9 bis 12 einstellt und die Geschmacksverbindungen freisetzt,
(c) die pH-eingestellte wässrige Zusammensetzung von (b) an einer Ultrafiltrationsmembran mit einer Molekulargewichtsgrenze bis zu 50.000 Dalton bei Einhaltung des pH in dem Bereich von 9 bis 12 unter geeigneten Ultrafiltrationsbedingungen vorbeigehen läßt, wobei die Geschmacksverbindungen durch die Membran hindurchgehen, wodurch dem Sojamaterial Geschmack entzogen wird und im wesentlichen alle löslich gemachten Sojaproteine zurückgehalten werden, und
(d) die von der Ultrafiltrationsmembran zurückgehaltenen, löslich gemachten Sojaproteine gewinnt, wobei die gewonnenen, löslich gemachten Sojaproteine das geschmacksentzogene Sojaproteinmaterial ist.

2. Soja enthaltender Teig des Anspruchs 1, bei dem das Sojamaterial wenigstens ein Bestandteil der aus Sojamilch, Sojaproteinisolat, Sojakonzentrat und Sojamehl bestehenden Gruppe ist.

3. Soja enthaltender Teig des Anspruchs 1 oder Anspruchs 2, bei dem das zur Teigherstellung verwendete, geschmacksentzogene Sojaproteinmaterial in einer festen Form vorliegt.

4. Soja enthaltender Teig eines der Ansprüche 1 bis 3, bei dem die wässrige Zusammensetzung von (a) eine Konzentration des Sojamaterials in dem Bereich von 1 bis 20 Prozent hat.

5. Soja enthaltender Teig eines der Ansprüche 1 bis 4, bei dem die Ultrafiltrationsmembran eine Grenze in dem Bereich von 1.000 bis 50.000 Dalton hat.

6. Soja enthaltender Teig eines der Ansprüche 1 bis 5, bei dem die Ultrafiltrationsmembran eine Grenze in dem Bereich von 10.000 bis 30.000 Dalton hat.

7. Soja enthaltender Teig eines der Ansprüche 1 bis 6, bei dem die Ultrafiltration bei einer Temperatur in dem Bereich von 10 bis 60°C und einem geeigneten Druck durchgeführt wird.

8. Soja enthaltender Teig eines der Ansprüche 1 bis 7, bei dem die Ultrafiltrationsmembran eine polymere, keramische oder anorganische Membran ist.

9. Soja enthaltender Teig eines der Ansprüche 1 bis 8, bei dem der Soja enthaltende Teig ein Pizzateig, ein Keksteig, ein Zwiebackteig oder ein Getreideflockenteig ist.

10. Soja enthaltendes Backprodukt mit einem aus dem Soja enthaltenden Teig eines der Ansprüche 1 bis 9 hergestellten Produkt.

11. Verfahren der Herstellung eines Soja enthaltenden Backprodukts, das ein geschmacksentzogenes Sojaproteinmaterial enthält, bei dem man
(1) einen Soja enthaltenden Teig herstellt, der einen Teig auf Mehlbasis und ein geschmacksentzogenes Sojaproteinmaterial enthält und
(2) den Soja enthaltenden Teig backt, um das Soja enthaltende Backprodukt zu bilden,
wobei das geschmacksentzogene Sojaproteinmaterial durch ein Verfahren hergestellt wird, bei dem man
(a) eine wässrige Zusammensetzung eines Sojamaterials herstellt, das lösliche Sojaproteine, Geschmacksverbindungen und unlösliche Materialien enthält,
(b) die Sojaproteine dadurch löslich macht, daß man die wässrige Zusammensetzung von (a) auf einen pH in dem Bereich von 9 bis 12 einstellt und die Geschmacksverbindungen freisetzt,
(c) die pH-eingestellte, wässrige Zusammensetzung von (b) an einer Ultrafiltrationsmembran mit einer Molekulargewichtsgrenze bis zu 50.000 Dalton bei Einhaltung des pH in dem Bereich von 9 bis 12 unter geeigneten Ultrafiltrationsbedingungen vorbeigehen läßt, wobei die Geschmacksverbindungen durch die Membran hindurchgehen, wodurch dem Sojamaterial Geschmack entzogen wird und im wesentlichen alle löslich gemachten Sojaproteine zurückgehalten werden, und
(d) die von der Ultrafiltrationsmembran zurückgehaltenen, löslich gemachten Sojaproteine gewinnt, wobei die gewonnenen, löslich gemachten Sojaproteine das geschmacksentzogene Sojaproteinmaterial sind.

12. Verfahren des Anspruchs 11, bei dem das Sojamaterial wenigstens ein Bestandteil aus der aus Sojamilch, Sojaproteinisolat, Sojakonzentrat und Sojamehl bestehenden Gruppe ist.

13. Verfahren des Anspruchs 11 oder 12, bei dem das in dem Teig enthaltene, geschmacksentzogene Sojaproteinmaterial in einer festen Form ist.

14. Verfahren eines der Ansprüche 11 bis 13, bei dem die wässrige Zusammensetzung von (a) eine Konzentration des Sojamaterials in dem Bereich von 1 bis 20 Prozent hat.

15. Verfahren eines der Ansprüche 11 bis 14, bei dem die Ultrafiltrationsmembran eine Grenze in dem Bereich von 1.000 bis 50.000 Dalton hat.

16. Verfahren eines der Ansprüche 11 bis 15, bei dem die Ultrafiltrationsmembran eine Grenze in dem Bereich von 10.000 bis 30.000 Dalton hat.

17. Verfahren eines der Ansprüche 11 bis 16, bei dem die Ultrafiltration bei einer Temperatur in dem Bereich von 10 bis 60°C und einem geeigneten Druck durchgeführt wird.

18. Verfahren eines der Ansprüche 11 bis 17, bei dem die Ultrafiltrationsmembran eine polymere, keramische oder anorganische Membran ist.

19. Verfahren eines der Ansprüche 11 bis 18, bei dem das Soja enthaltende Backprodukt eine Pizzakruste, ein Keks, ein Zwieback oder eine Getreideflocke ist.

## Revendications

1. Pâte contenant du soja comprenant une pâte à base de farine et une matière protéinique de soja au goût neutralisé, dans laquelle la matière protéinique de soja au goût neutralisé est préparée par un procédé comprenant les étapes consistant à :
(a) préparer une composition aqueuse d'une matière de soja contenant des protéines de soja soluble, des composés de saveur et des matières insolubles ;
(b) solubiliser les protéines de soja en ajustant la composition aqueuse de (a) à un pH dans la plage de 9 à 12 et à libérer les composés de saveur ;
(c) faire passer la composition aqueuse au pH ajusté de (b) ensuite par une membrane d'ultrafiltration ayant une dimension permettant d'éliminer une masse moléculaire jusqu'à 50 000 Daltons, tout en maintenant le pH dans la plage de 9 à 12, dans des conditions d'ultrafiltration appropriées, les composés de saveur traversant la membrane, neutralisant ainsi le goût de la matière de soja et conservant sensiblement la totalité des protéines de soja solubilisées ; et
(d) récupérer les protéines de soja solubilisées retenues par la membrane d'ultrafiltration, les protéines de soja solubilisées récupérées étant la matière protéinique de soja au goût neutralisé.

2. Pâte contenant du soja selon la revendication 1, dans laquelle la matière soja est au moins un élément du groupe consistant en lait de soja, un isolat de protéines de soja, un concentré de soja et de la farine de soja.

3. Pâte contenant du soja selon la revendication 1 ou 2, dans laquelle la matière soja au goût neutralisé, utilisée pour préparer la pâte est sous la forme solide.

4. Pâte contenant du soja selon l'une quelconque des revendications 1 à 3, dans laquelle la composition aqueuse de (a) a une concentration de matière soja dans la plage de 1 à 20 pour cent.

5. Pâte contenant du soja selon l'une quelconque des revendications 1 à 4, dans laquelle la membrane d'ultrafiltration a une dimension permettant d'éliminer une masse moléculaire de 1000 à 50 000 Daltons.

6. Pâte contenant du soja selon l'une quelconque des revendications 1 à 5, dans laquelle la membrane d'ultrafiltration a une dimension permettant d'éliminer une masse moléculaire de 10 000 à 30 000 Daltons.

7. Pâte contenant du soja selon l'une quelconque des revendications 1 à 6, dans laquelle l'ultrafiltration est effectuée à une température dans la plage de 10 à 60°C et à une pression appropriée.

8. Pâte contenant du soja selon l'une quelconque des revendications 1 à 7, dans laquelle la membrane d'ultrafiltration est une membrane polymère, céramique, ou inorganique.

9. Pâte contenant du soja selon l'une quelconque des revendications 1 à 8, dans laquelle la pâte contenant du soja est une pâte à pizza, une pâte à petits gâteaux secs, une pâte à biscuits salés ou une pâte à céréales.

10. Produit cuit contenant du soja, comprenant un produit préparé à partir de la pâte contenant du soja selon l'une quelconque des revendications 1 à 9.

11. Procédé pour la préparation d'un produit cuit contenant du soja, contenant une matière protéinique de soja au goût neutralisé, ledit procédé comprenant les étapes consistant à :
(1) préparer une pâte contenant du soja, comprenant une pâte à base de farine et une matière protéinique de soja au goût neutralisé ; et
(2) cuire la pâte contenant le soja pour former le produit cuit contenant le soja ;
Dans lequel la matière protéinique de soja au goût neutralisé est préparée par un procédé comprenant :
(a) préparer une composition aqueuse d'une matière de soja contenant des protéines de soja solubles, des composés de saveur, et des matières insolubles ;
(b) solubiliser les protéines de soja en ajustant la composition aqueuse de (a) à un pH dans la plage de 9 à 12 et en libérant les composés de saveur ;
(c) faire passer la composition aqueuse au pH ajusté de (b) ensuite par une membrane d'ultrafiltration ayant une dimension permettant d'éliminer une masse moléculaire jusqu'à 50 000 Daltons, tout en maintenant le pH dans la plage de 9 à 12, dans des conditions d'ultrafiltration appropriées, dans lesquelles les composés de saveur traversent la membrane, neutralisant ainsi le goût de la goût de la matière de soja et conservant sensiblement la totalité des protéines de soja solubilisées ; et
(d) récupérer les protéines de soja solubilisées retenues par la membrane d'ultrafiltration, les protéines de soja solubilisées étant la matière protéinique de soja au goût neutralisé.

12. Procédé selon la revendication 11, dans lequel la matière de soja est au moins un élément du groupe consistant en lait de soja, un isolat de protéines de soja, concentré de soja, et de la farine de soja.

13. Procédé selon les revendications 11 ou 12, dans lequel la matière protéinique de soja au goût neutralisé contenue dans la pâte est sous la forme solide.

14. Procédé selon l'une quelconque des revendications 11 à 13, dans lequel la composition aqueuse de (a) a une concentration de matière de soja dans la plage de 1 à 20 pour cent.

15. Procédé selon l'une quelconque des revendications 11 à 14, dans lequel la membrane d'ultrafiltration a une dimension permettant d'éliminer une masse moléculaire dans la plage de 1000 à 50 000 Daltons.

16. Procédé selon l'une quelconque des revendications 11 à 15, dans lequel la membrane d'ultrafiltration a une dimension permettant d'éliminer une masse moléculaire dans la plage de 10 000 à 30 000 Daltons.

17. Procédé selon l'une quelconque des revendications 11 à 16, dans lequel l'ultrafiltration est effectuée dans la plage de 10 à 60°C et à une pression appropriée.

18. Procédé selon l'une quelconque des revendications 11 à 17, dans lequel la membrane d'ultrafiltration est une membrane polymère, céramique ou inorganique.

19. Procédé selon l'une quelconque des revendications 11 à 18, dans lequel le produit cuit contenant du soja est une croûte à pizza, un gâteau sec, un biscuit salé ou une céréale.
